# EUROPEAN PATENT APPLICATION

(11) **EP 4 369 758 A1**
(43) Date of publication of application: **15.05.2024**
(21) Application number: 21948843.4
(22) Date of filing: 08.07.2021
(51) Int. Cl.: H04W 8/24

(54) **INTERFERENCE CONTROL METHOD AND APPARATUS THEREOF**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2021/105341
(87) International publication number: WO 2023/279347

(57) **Abstract**

Disclosed in embodiments of the present disclosure are a method for controlling interference and an apparatus thereof, which may be applied to the technical field of communications. The method configured to be executed by a terminal device comprises: sending first indication information, the first indication information being used for indicating interference information of the terminal device. In this way, a network device may obtain the interference information of the terminal device, and then adjusts a time-frequency domain resource corresponding to the interference information, thereby ensuring reliable reception of downlink data, providing a guarantee for communication transmission, and further improving the quality and efficiency of communication transmission.

## Description

### TECHNICAL FIELD

The present disclosure relates to a communication technical field, and more particularly to a method for controlling interference and an apparatus for controlling interference.

### BACKGROUND

Generally, during a communication and transmission process between a terminal device and a network device, if a frequency of an uplink signal sent by the terminal device is relatively close to a frequency of a downlink signal received by the terminal device, harmonic or intermodulation interference may occur in the received downlink signal, which may cause the terminal device to be unable to receive the downlink signal normally, thereby affecting communication transmission. Therefore, how to control harmonic or intermodulation interference during the communication process between the terminal device and the network device is an issue that needs to be solved urgently.

### SUMMARY

Embodiments of the present disclosure provide a method for controlling interference and an apparatus for controlling interference, which may be applied to a communication technical field.

In a first aspect, embodiments of the present disclosure provide a method for controlling interference. The method is performed by a terminal device, and includes transmitting first indication information. The first indication information is used to indicate interference information of the terminal device.

Optionally, transmitting the first indication information includes:
transmitting the first indication information in response to satisfying a specified transmitting condition.

Optionally, the method further includes:
receiving second indication information. The second indication information is used to indicate the specified transmitting condition; or
determining the specified transmitting condition according to a protocol.

Optionally, the specified transmitting condition includes at least one of:
the second indication information indicating that transmitting the first indication information is allowed;
a receiver sensitivity being less than or equal to a first threshold value;
a receiver sensitivity degradation value being greater than or equal to a second threshold value;
a first measurement result being less than or equal to a third threshold value; and
a second measurement result being greater than or equal to a fourth threshold value.

Optionally, the second indication information includes at least one of:
whether the terminal device is allowed to report frequency information of the interference;
whether the terminal device is allowed to report uplink transmission frequency information of the interference;
whether the terminal device is allowed to report an uplink transmission frequency information combination of the interference;
whether the terminal device is allowed to report a frequency information combination of the interference;
whether the terminal device is allowed to report downlink reception frequency information of the interference;
whether the terminal device is allowed to report a correspondence between the uplink transmission frequency information and the downlink reception frequency information of the interference;
whether the terminal device is allowed to report a correspondence between the uplink transmission frequency information combination and the downlink reception frequency information of the interference; and
whether the terminal device is allowed to report receiver sensitivity information of the interference.

Optionally, the method further includes:
transmitting third indication information. The third indication information is used to indicate a capability of reporting interference information supported by the terminal device.

Optionally, the third indication information includes at least one of:
capability of supporting to report uplink transmission frequency information of the interference;
capability of supporting to report an uplink transmission frequency information combination of the interference;
capability of supporting to report downlink reception frequency information of the interference;
capability of supporting to report a correspondence between the uplink transmission frequency information and the downlink reception frequency information of the interference;
capability of supporting to report a correspondence between the uplink transmission frequency information combination and the downlink reception frequency information of the interference;
capability of supporting to report receiver sensitivity information of the interference; and
receiver sensitivity capability information of the terminal device.

Optionally, the receiver sensitivity capability information of the terminal device includes at least one of:
a receiver reference sensitivity power level; and
a maximum sensitivity degradation value.

Optionally, the interference information includes at least one of:
uplink transmission frequency information;
an uplink transmission frequency information combination;
the uplink transmission frequency information and a downlink reception frequency information combination;
downlink reception frequency information;
a correspondence between the uplink transmission frequency information and the downlink reception frequency information;
a correspondence between the uplink transmission frequency information combination and the downlink reception frequency information;
receiver sensitivity information; and
an interfering party's radio technical indication and an interfered party's radio technical indication.

Optionally, the frequency information includes at least one of:
frequency point information;
bandwidth information;
starting frequency point information;
ending frequency point information;
starting physical resource block;
ending physical resource block; and
bandwidth section information.

Optionally, the uplink transmission frequency information includes: an uplink transmission frequency and/or harmonic signal information of the uplink transmission frequency.

Optionally, the harmonic signal information of the uplink transmission frequency includes at least one of:
multiple of a harmonic signal relative to a fundamental signal; and
a frequency range of the harmonic signal.

Optionally, the uplink transmission frequency information combination includes a plurality of uplink transmission frequencies and/or intermodulation signal information between the plurality of the uplink transmission frequencies.

Optionally, the intermodulation signal information between the plurality of the uplink transmission frequencies includes at least one of:
an order of the intermodulation signal;
multiple information between individual frequencies in the intermodulation signal; and
operational relationship information between individual frequencies in the intermodulation signal.

Optionally, the receiver sensitivity information comprises at least one of:
a receiver reference sensitivity power level supported by the terminal device;
current sensitivity of a receiver in the terminal device;
receiver maximum sensitivity degradation supported by the terminal device;
current maximum sensitivity degradation of the receiver in the terminal device; and
current sensitivity degradation of the receiver in the terminal device.

In a second aspect, embodiments of the present disclosure provide a method for controlling interference. The method is performed by a network device and includes receiving first indication information. The first indication information is used to indicate interference information of a terminal device.

Optionally, the method further includes:
transmitting second indication information to the terminal device. The second indication information is used to indicate a specified transmitting condition corresponding to the first indication information.

Optionally, the specified transmitting condition includes at least one of:
the second indication information indicating that transmitting the first indication information is allowed;
a receiver sensitivity being less than or equal to a first threshold value;
a receiver sensitivity degradation value being greater than or equal to a second threshold value;
a first measurement result being less than or equal to a third threshold value; and
a second measurement result being greater than or equal to a fourth threshold value.

Optionally, the second indication information includes at least one of:
whether the terminal device is allowed to report frequency information of the interference;
whether the terminal device is allowed to report uplink transmission frequency information of the interference;
whether the terminal device is allowed to report an uplink transmission frequency information combination of the interference;
whether the terminal device is allowed to report a frequency information combination of the interference;
whether the terminal device is allowed to report downlink reception frequency information of the interference;
whether the terminal device is allowed to report a correspondence between the uplink transmission frequency information and the downlink reception frequency information of the interference;
whether the terminal device is allowed to report a correspondence between the uplink transmission frequency information combination and the downlink reception frequency information of the interference; and
whether the terminal device is allowed to report receiver sensitivity information of the interference.

Optionally, the method further includes:
receiving third indication information. The third indication information is used to indicate a capability of reporting interference information supported by the terminal device.

Optionally, the third indication information includes at least one of:
capability of supporting to report uplink transmission frequency information of the interference;
capability of supporting to report an uplink transmission frequency information combination of the interference;
capability of supporting to report downlink reception frequency information of the interference;
capability of supporting to report a correspondence between the uplink transmission frequency information and the downlink reception frequency information of the interference;
capability of supporting to report a correspondence between the uplink transmission frequency information combination and the downlink reception frequency information of the interference;
capability of supporting to report receiver sensitivity information of the interference; and
receiver sensitivity capability information of the terminal device.

Optionally, the receiver sensitivity capability information of the terminal device includes at least one of:
a receiver reference sensitivity power level; and
a maximum sensitivity degradation value.

Optionally, the interference information includes at least one of:
uplink transmission frequency information;
an uplink transmission frequency information combination;
the uplink transmission frequency information and a downlink reception frequency information combination;
downlink reception frequency information;
a correspondence between the uplink transmission frequency information and the downlink reception frequency information;
a correspondence between the uplink transmission frequency information combination and the downlink reception frequency information;
receiver sensitivity information; and
an interfering party's radio technical indication and an interfered party's radio technical indication.

Optionally, the frequency information includes at least one of:
frequency point information;
bandwidth information;
starting frequency point information;
ending frequency point information;
starting physical resource block;
ending physical resource block; and
bandwidth section information.

Optionally, the uplink transmission frequency information includes an uplink transmission frequency and/or harmonic signal information of the uplink transmission frequency.

Optionally, the harmonic signal information of the uplink transmission frequency includes at least one of:
multiple of a harmonic signal relative to a fundamental signal; and
a frequency range of the harmonic signal.

Optionally, the uplink transmission frequency information combination includes a plurality of uplink transmission frequencies and/or intermodulation signal information between the plurality of the uplink transmission frequencies.

Optionally, the intermodulation signal information between the plurality of the uplink transmission frequencies includes at least one of:
an order of the intermodulation signal;
multiple information between individual frequencies in the intermodulation signal; and
operational relationship information between individual frequencies in the intermodulation signal.

Optionally, the receiver sensitivity information includes at least one of:
a receiver reference sensitivity power level supported by the terminal device;
receiver maximum sensitivity degradation supported by the terminal device;
current maximum sensitivity degradation of the receiver in the terminal device; and
current sensitivity degradation of the receiver in the terminal device.

Optionally, the method further includes:
updating frequency information and/or uplink carrier aggregation information corresponding to the terminal device according to the first indication information.

Optionally, updating the frequency information and/or the uplink carrier aggregation information corresponding to the terminal device includes at least one of:
staggering a transmitting time of the uplink transmission frequency indicated by the first indication information and a receiving time of the downlink reception frequency;
invalidating the uplink transmission frequency indicated by the first indication information, or one or more uplink transmission frequencies in the uplink transmission frequency information combination;
staggering a transmitting time of all or part of the uplink frequencies in the uplink transmission frequency information combination indicated by the first indication information;
invalidating the downlink reception frequency indicated by the first indication information; and,
instructing the terminal device to reduce an uplink transmission power.

In a third aspect, embodiments of the present disclosure provide a communication device. The communication device has some or all of functions of the terminal device to implement the method according to the first aspect. For example, the functions of the communication device may have the functions of some or all of embodiments in the present disclosure, or may have the functions of implementing any one embodiment of the present disclosure separately. The functions described may be implemented via hardware or by executing corresponding software through hardware. The hardware or the software includes one or more units or modules corresponding to the above-mentioned functions.

In one embodiment, a structure of the communication device may include a transceiver module and a processing module, and the processing module is configured to support the communication device to perform corresponding functions in the above-mentioned method. The transceiver module is configured to support communication between the communication device and other devices. The communication device may further include a storage module coupled to the transceiver module and the processing module, which stores necessary computer programs and data for the communication device.

As an example, the processing module may be a processor, the transceiver module may be a transceiver or a communication interface, and the storage module may be a memory.

In a fourth aspect, embodiments of the present disclosure provide a communication device. The communication device has some or all of functions of the network device to implement the method according to the second aspect. For example, the functions of the communication device may have the functions of some or all of embodiments in the present disclosure, or may have the functions of implementing any one embodiment of the present disclosure separately. The functions described may be implemented via hardware or by executing corresponding software through hardware. The hardware or the software includes one or more units or modules corresponding to the above-mentioned functions.

In one embodiment, a structure of the communication device may include a transceiver module and a processing module, and the processing module is configured to support the communication device to perform corresponding functions in the above-mentioned method. The transceiver module is configured to support communication between the communication device and other devices. The communication device may further include a storage module coupled to the transceiver module and the processing module, which stores necessary computer programs and data for the communication device.

As an example, the processing module may be a processor, the transceiver module may be a transceiver or a communication interface, and the storage module may be a memory.

In a fifth aspect, embodiments of the present disclosure provide a communication device. The communication device includes a processor. When the processor calls a computer program in a memory, the processor executes the method according to the first aspect.

In a sixth aspect, embodiments of the present disclosure provide a communication device. The communication device includes a processor. When the processor calls a computer program in a memory, the processor executes the method according to the second aspect.

In a seventh aspect, embodiments of the present disclosure provide a communication device. The communication device includes a processor and a memory having stored therein a computer program. When the computer program is executed by the processor, the communication device is caused to execute the method according to the first aspect.

In an eighth aspect, embodiments of the present disclosure provide a communication device. The communication device includes a processor and a memory having stored therein a computer program. When the computer program is executed by the processor, the communication device is caused to execute the method according to the second aspect.

In a ninth aspect, embodiments of the present disclosure provides a communication device. The device includes a processor and an interface circuit. The interface circuit is configured to receive code instructions and transmit them to the processor. The processor is configured to run the code instructions to cause the device to perform the method according to the first aspect.

In a tenth aspect, embodiments of the present disclosure provides a communication device. The device includes a processor and an interface circuit. The interface circuit is configured to receive code instructions and transmit them to the processor. The processor is configured to run the code instructions to cause the device to perform the method according to the second aspect.

In an eleventh aspect, embodiments of the present disclosure provides a system for controlling interference. The system includes the communication device according to the third aspect and the communication device according to the fourth aspect, or the system includes the communication device according to the fifth aspect and the communication device according to the sixth aspect, or the system includes the communication device according to the seventh aspect and the communication device according to the eighth aspect, or the system includes the communication device according to the ninth aspect and the communication device according to the tenth aspect.

In a twelfth aspect, embodiments of the present disclosure provide a computer-readable storage medium having stored therein indications for the terminal device that, when executed, cause the method according to the first aspect to be implemented.

In a thirteenth aspect, embodiments of the present disclosure provide a computer-readable storage medium having stored therein indications for the terminal device that, when executed, cause the method according to the second aspect to be implemented.

In a fourteenth aspect, the present disclosure also provides a computer program product including a computer program, which when run on a computer causes the computer to execute the method according to the first aspect.

In a fifteenth aspect, the present disclosure also provides a computer program product including a computer program, which, when run on a computer, causes the computer to execute the method according to the second aspect.

In a sixteenth aspect, the present disclosure provides a chip system. The chip system includes at least one processor and an interface for supporting a terminal device to implement the functions involved in the first aspect. For example, determining or processing at least one of data and information involved in the above-mentioned method. In a possible design, the chip system further includes a memory, and the memory is configured to store necessary computer programs and data for the terminal device. The chip system may be composed of chips, or may include chips and other discrete devices.

In a sixteenth aspect, the present disclosure provides a chip system. The chip system includes at least one processor and an interface for supporting a terminal device to implement the functions involved in the second aspect. For example, determining or processing at least one of data and information involved in the above-mentioned method. In a possible design, the chip system further includes a memory, and the memory is configured to store necessary computer programs and data for the terminal device. The chip system may be composed of chips, or may include chips and other discrete devices.

In an eighteenth aspect, the present disclosure provides a computer program that, when run on a computer, causes the computer to execute the method according to the first aspect.

In a nineteenth aspect, the present disclosure provides a computer program that, when run on a computer, causes the computer to perform the method according to in the second aspect.

### BRIEF DESCRIPTION OF THE DRAWINGS

In order to more clearly illustrate the technical solutions in embodiments of the present disclosure or the background technology, the drawings required to be used in embodiments or the background technology of the present disclosure will be described below.
FIG. 1 is a schematic diagram of a communication system provided by an embodiment of the present disclosure;
FIG. 2 is a schematic flowchart of a method for controlling interference provided by an embodiment of the present disclosure;
FIG. 3 is a schematic flowchart of a method for controlling interference provided by another embodiment of the present disclosure;
FIG. 4 is a schematic flowchart of a method for controlling interference provided by another embodiment of the present disclosure;
FIG. 5 is a schematic flowchart of a method for controlling interference provided by another embodiment of the present disclosure;
FIG. 6 is a schematic flowchart of a method for controlling interference provided by another embodiment of the present disclosure;
FIG. 7 is a schematic flowchart of a method for controlling interference provided by another embodiment of the present disclosure;
FIG. 8 is a schematic flowchart of a method for controlling interference provided by another embodiment of the present disclosure;
FIG. 9 is a schematic flowchart of a method for controlling interference provided by another embodiment of the present disclosure;
FIG. 10 is a schematic diagram of a communication device according to an embodiment of the present disclosure;
FIG. 11 is a schematic diagram of a communication device according to another embodiment of the present disclosure;
FIG. 12 is a schematic diagram of a chip according to an embodiment of the present disclosure.

### DETAILED DESCRIPTION

For ease of understanding, terminology involved in the present disclosure is first introduced.

### 1. Harmonic interference and intermodulation interference

Intermodulation interference is generated by nonlinear circuits in the transmission channel. Harmonics are radio waves that are integer multiples of the fundamental frequency generated during the modulation process of radio waves. When the harmonic frequency coincides with the receiving frequency, it will cause interference to the receiver. This interference is called harmonic interference.

When two or more signals of different frequencies are input to a nonlinear circuit, due to the action of nonlinear devices, multiple harmonics and combined frequency components may be generated, among which the combined frequency is close to the required received signal frequency ω0 components may pass through the receiver smoothly and form interference. This interference is called intermodulation interference.

### 2. Receiver sensitivity

The receiver sensitivity defines the minimum signal strength that a receiver may receive and still function properly. Sensitivity may be a power level, usually expressed in decibel relative to one milliwatt (dBM).

### 3. Receiver sensitivity fallback

Due to harmonics and intermodulation interference within the terminal, the terminal is allowed to reduce or roll back the receiver sensitivity of a specific frequency band. The performance index that allows terminal receiver sensitivity to fall back is maximum sensitivity degradation (MSD), which is identified by decibel relative (dB).

In order to better understand a method for controlling interference disclosed in embodiments of the present disclosure, the communication system to which embodiments of the present disclosure are applicable is first described below.

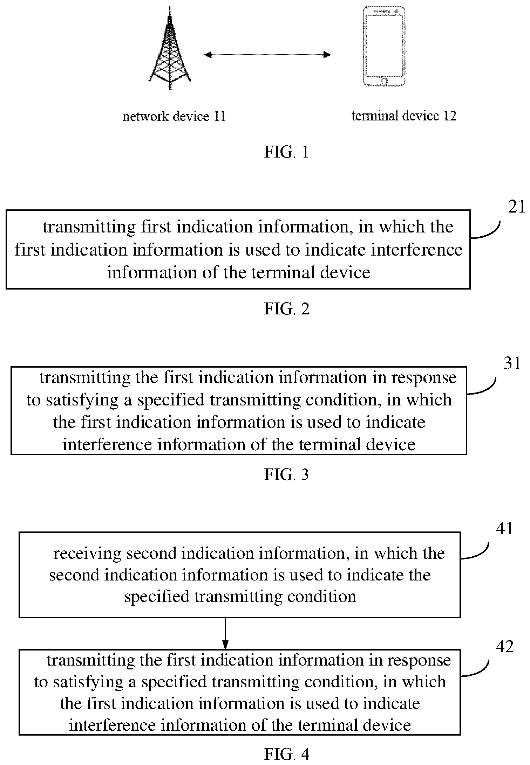

Please refer to FIG. 1, it is a schematic diagram of a communication system provided by an embodiment of the present disclosure. The communication system may include but is not limited to one network device and one terminal device. The number and form of devices shown in FIG. 1 are only for examples and do not constitute a limitation on the embodiments of the present disclosure. In actual applications, two or more network device and two or more terminal devices may be included. The communication system shown in FIG. 1 includes a network device 11 and a terminal device 12 as an example.

It is noted that the technical solutions of embodiments of the present disclosure may be applied to various communication systems. For example, a long term evolution (LTE) system, a fifth generation (5G) mobile communication system, a 5G new radio (NR) system, or other future new mobile communication systems.

The network device 11 in embodiments of the present disclosure is an entity on the network side that is configured to transmit or receive signals. For example, the network device 11 may be an evolved base station (evolved NodeB, eNB), a transmission reception point (TRP), a next generation base station (next generation NodeB, gNB) in an NR system, or other base stations in future mobile communication systems, or access nodes in wireless fidelity (WiFi) systems, etc. The embodiments of the present disclosure do not limit the specific technologies and specific equipment forms used by network device. The network device provided by the embodiments of the present disclosure may be composed of a centralized unit (CU) and a distributed unit (DU). The CU may also be called a control unit. The structure of the CU-DU may separate the protocol layers of network device, such as base stations, and place some protocol layer functions under centralized control on the CU. The remaining part or all protocol layer functions are distributed in the DU, and the CU centrally controls the DU.

The terminal device 12 in embodiments of the present disclosure is an entity on the user side for receiving or transmitting signals, such as a mobile phone. The terminal device may also be called terminal device (terminal), user equipment (user equipment, UE), mobile station (MS), mobile terminal device (MT), etc. The terminal device may be a car with communication functions, a smart car, a mobile phone, a wearable device, a tablet (Pad), a computer with wireless transceiver functions, a virtual reality (VR) terminal device, an augmented reality (AR) terminal device, wireless terminal device in industrial control, wireless terminal device in self-driving, wireless terminal device in remote medical surgery, wireless terminal device in smart grid, wireless terminal device in transportation safety, wireless terminal device in smart city, wireless terminal device in smart home, etc. Embodiments of the present disclosure do not limit the specific technology and specific equipment form used by the terminal device.

It may be understood that the communication system described in embodiments of the present disclosure is to more clearly illustrate the technical solutions of embodiments of the present disclosure, and does not constitute a limitation on the technical solutions provided by embodiments of the present disclosure. As those skilled in the art will know, with the evolution of system architecture and the emergence of new business scenarios, the technical solutions provided by embodiments of the present disclosure are also applicable to similar technical problems.

The method for controlling interference and apparatus provided by the present disclosure will be introduced in detail below with reference to the accompanying drawings.

Please refer to FIG. 2. FIG. 2 is a schematic flowchart of a method for controlling interference provided by an embodiment of the present disclosure. The method is executed by a terminal device. As shown in FIG. 2, the method may include but is not limited to the following steps.

In step 21, first indication information is transmitted. The first indication information is used to indicate interference information of the terminal device.

Generally, in a communication system, if the frequency of the uplink data transmitted by a terminal device is too close to the frequency of the downlink data it receives, harmonics or intermodulation interference may occur in the downlink data it receives, which may cause downlink data of the terminal device cannot be received normally, thereby affecting communication transmission.

In embodiments of the present disclosure, the terminal device may transmit the first indication information to the network device, so that the network device may learn the interference information of the terminal device, and then adjust the time-frequency domain resources corresponding to the interference information, thereby ensuring the reliability reception of downlink data, which provides guarantee for communication transmission, so as to improve the quality and efficiency of communication transmission.

Optionally, the interference information of the terminal device may be uplink transmission frequency information.

For example, the terminal device transmits the first indication information to the network device, which indicates that the uplink transmission frequency causing interference is F1, so that when the network device transmits downlink data to the terminal device, the resources for transmitting downlink data may be adjusted accordingly. For example, a transmitting time of the downlink data is staggered with a transmitting time of the uplink transmission frequency F1, or other frequencies far away from F1 may be used to transmit the downlink data.

Optionally, the uplink transmission frequency information may include the uplink transmission frequency, or may also include harmonic signal information of the uplink transmission frequency, or may also include the uplink transmission frequency and its harmonic signal information, etc., which is not limited in the present disclosure.

Optionally, the harmonic signal information of the uplink transmission frequency may include multiple of the harmonic signal relative to the fundamental signal; or it may also include the frequency range of the harmonic signal, or it may also include the multiple of the harmonic signal relative to the fundamental signal and the frequency range of harmonic signals.

For example, the multiple of the harmonic signal of the uplink transmission frequency F1 relative to the fundamental wave signal is 2, and a frequency range of the harmonic signal is 20 megahertz (MHz) to 50MHz, then the uplink transmission frequency information may be uplink transmission frequency F1; or it may also be the multiple of the harmonic signal of the uplink transmission frequency F1 relative to the fundamental signal is 2; or it may also be the uplink transmission frequency F1, the multiple of the harmonic signal of F1 relative to the fundamental signal is 2, and the frequency range of the harmonic signal of 20 MHz to 50 MHz, etc., which is not limited in the present disclosure.

Optionally, the interference information of the terminal device may be an uplink transmission frequency information combination.

For example, the terminal device transmits the first indication information to the network device, which indicates the uplink transmission frequency combination causing interference as combination 1. This combination 1 corresponds to the uplink transmission frequencies F1 and F2, so that the network device may learn the interference caused by the terminal device. The uplink transmission frequencies are F1 and F2. The network device may then determine whether F1 and F2 interfere with the downlink frequency F3 after intermodulation based on the time domain resources corresponding to F1 and F2, and then the using time of F1 and F2 may be staggered. The network device may also adjust the resources for transmitting the downlink data at the interfered frequency F3 accordingly. For example, the transmitting time of the downlink data may be staggered with the transmitting time of the uplink transmission frequency F1, or the transmitting time of downlink data may be staggered with the uplink transmission frequency F2.

Optionally, the interference information of the terminal device may be the uplink transmission frequency information and a downlink reception frequency information combination.

For example, the first indication information transmitted by the terminal device to the network device indicates that the uplink transmission frequency causing interference is F1 and the interfered downlink frequency is F2, so that the network device may learn that the uplink transmission frequency causing interference by the terminal device is F1, and the interfered downlink frequency F2. Then the network device may determine whether F1 and F2 interfere with each other based on the time domain resources corresponding to F1 and F2. If F1 and F2 interfere with each other, the use time of F1 and F2 may be staggered. If the interfering uplink transmission frequency F1 and the interfered downlink frequency F2 are caused by other reasons, the network device may adjust the resources for transmitting downlink data accordingly when transmitting downlink data to the terminal device. For example, the transmitting time of the downlink data may be staggered with the transmitting time of uplink transmission frequency F 1, or enable other frequencies far away from F2 to transmit downlink data.

Optionally, the interference information of the terminal device may be downlink reception frequency information.

For example, the first indication information transmitted by the terminal device to the network device indicates that the downlink frequency information it interferes with is F1, so that when the network device transmits downlink data to the terminal device, it may correspondingly adjust the resources for transmitting downlink data. For example, other frequencies far away from F1 may be used to transmit the downlink data.

Optionally, the interference information of the terminal device may be the correspondence between the uplink transmission frequency information and the downlink reception frequency information.

For example, the terminal device transmits the first instruction information to the network device, which indicates that uplink transmission frequency F1 interferes with the downlink reception frequency F2, so that when the network device transmits the downlink data to the terminal device, it may correspondingly adjust the resources for transmitting downlink data, such as the transmitting time of the uplink transmission frequency F1 and the transmitting time of the downlink reception frequency F2 may be staggered.

Optionally, the interference information of the terminal device may be the correspondence between the uplink transmission frequency information combination and the downlink reception frequency information.

For example, the terminal device transmits the first instruction information to the network device, which indicates that its uplink transmission frequencies F1 and F2 intermodulate and interfere with the downlink reception frequency F3, so that when the network device transmits the downlink data to the terminal device, it may adjust resources for transmitting the downlink data accordingly. For example, the transmitting time of the downlink reception frequency F3 may be staggered with the transmitting time of the uplink transmission frequencies F1 and F2, or the transmitting time of the uplink transmission frequencies F1 and F2 may be staggered.

Optionally, the interference information of the terminal device may be receiver sensitivity information.

For example, the terminal device transmits the first indication information to the network device to indicate that its interference information is the receiver sensitivity information, so that when the network device transmits the downlink data to the terminal device, it may adjust resources of transmitting the downlink data based on the receiver sensitivity information, or adjust the uplink transmission power to avoid interference as much as possible.

Optionally, the interference information of the terminal device may be an interfering party wireless technology indication and an interfered party wireless technology indication.

The interferer's wireless technology indication may be LTE wireless technology, or it may be 5GNR wireless technology, or it may be the 3rd generation partnership project (3GPP) wireless technology. Correspondingly, the wireless technology indication of the interfered party may be LTE wireless technology, or it may be 5G NR wireless technology, or it may be the 3rd generation partnership project (3GPP) wireless technology.

For example, the protocol stipulates that the interfering party's wireless technology indication and the interfered-side wireless technology indication may be represented by the value of a specific bit.

For example, the protocol stipulates that the values of the first three bits in the first indication information represent the wireless technology indication of the interfering party, and the values of the fourth to sixth bits in the first indication information represent the wireless technology of the interfered party. When the value of the first bit is 1, it indicates that the interfering wireless technology is LTE wireless technology. When the value of the second bit is 1, it indicates that the interfering wireless technology is 5G NR wireless technology. When the value of the third bit is 1, it indicates that the interfering wireless technology is 3GPP wireless technology. When the value of the fourth bit is 1, it indicates that the wireless technology of the interfered party is LTE wireless technology. When the value of the fifth bit is 1, it indicates that the wireless technology of the interfered party is 5G NR wireless technology. When the value of the sixth bit is 1, it indicates that the wireless technology of the interfered party is 3GPP wireless technology. Therefore, the network device may determine the interfering party's wireless technology indication and the interfered party's wireless technology indication, etc., through the value of the specific bit, which is not limited in the present disclosure.

It may be understood that the first indication information transmitted by the terminal device to the network device may indicate the above-mentioned one kind of interference information, or may also indicate a plurality of the above-mentioned interference information, etc., which is not limited in the present disclosure.

It is noted that the above examples are only illustrative and cannot be used as a limitation on the interference information of the terminal device in embodiments of the present disclosure.

By implementing embodiments of the present disclosure, the terminal device may transmit the first instruction information to the network device, so that the network device may learn the interference information of the terminal device, and then adjust the time-frequency domain resources corresponding to the interference information, thereby ensuring the reliable reception of the downlink data, which provides guarantee for communication transmission, so as to improve the quality and efficiency of communication transmission.

Please refer to FIG. 3. FIG. 3 is a schematic flowchart of a method for controlling interference provided by an embodiment of the present disclosure. The method is executed by a terminal device. As shown in FIG. 3, the method may include but is not limited to the following steps.

In step 31, in response to satisfying a specified transmitting condition, first indication information is transmitted. The first indication information is used to indicate interference information of the terminal device.

Optionally, the terminal device may determine the specified transmitting conditions according to a protocol.

For example, the protocol stipulates that the specified transmitting condition may be the receiver sensitivity being less than or equal to a first threshold value.

The first threshold value may be configured by the network device, or may be agreed upon in a protocol, which is not limited in the present disclosure.

For example, according to the protocol agreement, it is determined that the specified transmitting condition is that the receiver sensitivity is less than or equal to the first threshold value. For example, the first threshold is -80dBM, and the receiver sensitivity of the terminal device is -96dBM. If the terminal device is interfered, its receiver sensitivity changes to - 70dBM, and its sensitivity is less than the first threshold value -80dBM sensitivity, that is, the specified transmitting conditions are met, so the terminal device may transmit the first indication information to indicate to the network device the present disclosure does not limit its interference information, etc.

Optionally, the specified transmitting condition may also be the receiver sensitivity degradation value being greater than or equal to a second threshold value.

The second threshold value may be configured by the network device, or may be agreed upon in a protocol, which is not limited in the present disclosure.

For example, according to the protocol agreement, it is determined that the specified transmitting condition is that the receiver sensitivity degradation value is greater than or equal to the second threshold value. For example, the second threshold is 20dBM, and the receiver sensitivity of the terminal device is -96dBM. If the receiver sensitivity of the terminal device becomes -70dBM after being interfered with, and the receiver sensitivity degradation value of the terminal device is 26dBM, which is greater than the second threshold value of 20dBM, the specified transmitting conditions are met, and the terminal device may transmits the first indication information to indicate to the network device the interference information of the terminal device, etc., which is not limited in the present disclosure.

Optionally, the specified transmitting condition may also be a first measurement result being less than or equal to a third threshold value.

The first measurement result may be reference signal received power (RSRP); or it may be reference signal received quality (RSRQ); or it may be signal to interference ratio (, SINR), etc., which is not limited in the present disclosure.

The third threshold value may be a value agreed upon by the protocol, or may be a value configured by the network device, which is not limited in the present disclosure.

For example, the third threshold value is 20dB, and the first measurement result is a signal-to-interference-noise ratio, and the value is 20dB. The two are equal and meet the specified transmitting conditions, so the terminal device may transmit the first indication information to indicate interference information of the terminal device to the network device, which is not limited in the present disclosure.

Optionally, the specified transmitting condition may also be a second measurement result being greater than or equal to a fourth threshold value.

The fourth threshold value may be a value agreed upon by the protocol, or may be a value configured by the network device, which is not limited in the present disclosure.

Optionally, the second measurement result may be a block error rate (BLER).

For example, the fourth threshold value is 10%, the second measurement result is the block error rate, and the value is 15%, which is greater than the fourth threshold value and meets the specified transmitting condition, so that the terminal device may transmit the first indication information to indicate interference information of the terminal device to the network device, etc., which is not limited in the present disclosure.

Optionally, the interference information of the terminal device may include at least one of uplink transmission frequency information; an uplink transmission frequency information combination; the uplink transmission frequency information and a downlink reception frequency information combination; downlink reception frequency information; a correspondence between the uplink transmission frequency information and the downlink reception frequency information; a correspondence between the uplink transmission frequency information combination and the downlink reception frequency information; receiver sensitivity information; and an interfering party's radio technical indication and an interfered party's radio technical indication.

It is noted that, for the specific content and implementation method of the interference information of the terminal device, reference may be made to the descriptions of other embodiments of the present disclosure, and will not be described again here.

Optionally, the frequency information may be frequency point information.

The frequency point may be a number of a given fixed frequency. For example, the uplink transmission frequency F1 is absolute radio frequency channel number (ARFCN) 1; or the downlink transmission frequency F2 is ARFCN 2, etc., which is not limited in the present disclosure.

Optionally, the frequency information may be bandwidth information.

The bandwidth information may be of various kinds. For example, the bandwidth of the uplink transmission frequency may be 20 MHz, or the bandwidth of the downlink transmission frequency may be 30 MHz, etc. which is not limited in the present disclosure.

Optionally, the frequency information may be starting frequency point information. For example, the starting frequency point of the downlink transmission frequency is ARFCN 2, or the starting frequency point of the uplink transmission frequency is ARFCN 3, etc., which is not limited in the present disclosure.

Optionally, the frequency information may also be ending frequency point information. For example, the ending frequency point of the downlink transmission frequency is ARFCN 2, or the starting frequency point of the uplink transmission frequency is ARFCN 3, etc., which is not limited in the present disclosure.

Optionally, the frequency information may also be a starting physical resource block (PRB). For example, the starting PRB of the downlink transmission frequency is PRB 1, or the starting PRB of the uplink transmission frequency is PRB 2, etc., which is not limited in the present disclosure.

Optionally, the frequency information may also be ending PRB. For example, the ending PRB of the downlink transmission frequency is PRB 1, or the ending PRB of the uplink transmission frequency is PRB 2, etc., which is not limited in the present disclosure.

Optionally, the frequency information may also be bandwidth section (BWP) information. For example, the frequency information may be BWP1, or the frequency information may be BWP 2, etc., which is not limited in the present disclosure.

It may be understood that the frequency information may be one of the above, or may be multiple of the above, which is not limited in the present disclosure.

Optionally, the uplink transmission frequency information combination may include a plurality of uplink transmission frequencies, or may include intermodulation signal information between a plurality of uplink transmission frequencies, or may also include a plurality of uplink transmission frequencies, and intermodulation signal information between a plurality of uplink transmission frequencies, etc., which is not limited in the present disclosure.

Optionally, the intermodulation signal information between the plurality of uplink transmission frequencies may be the order of the intermodulation signal. For example, the order of the intermodulation signal between the plurality of the uplink transmission frequencies may be 1st order, or 2nd order, etc., which is not limited in the present disclosure.

Optionally, the intermodulation signal information between the plurality of uplink transmission frequencies may also be multiple information between each frequency in the intermodulation signal. For example, the uplink transmission frequency information is combined into frequency A and frequency B, and the frequency multiple information in the intermodulation signal may be twice frequency A, etc., which is not limited in the present disclosure.

Optionally, the intermodulation signal information between the plurality of uplink transmission frequencies may also be the operational relationship information between the frequencies in the intermodulation signal.

The operational relationship information may be an additive relationship, or may be a subtractive relationship, etc., for example, it may be recorded as "+", "-", etc., which is not limited in the present disclosure.

For example, if the uplink transmission frequency information is combined into frequency A and frequency B, and the operational relationship between the frequencies in the intermodulation signal is an additive relationship, then the intermodulation signal may be A+B, etc., which is not limited in the present disclosure.

For another example, if the uplink transmission frequency information combination 1 is frequency A and frequency B, and an order of the intermodulation signal is 1^{st} order, then the intermodulation signal may be A and B.

Optionally, the uplink transmission frequency information combination 1 is frequencies A and B, the order of the intermodulation signal is 2^{nd} order, and the operational relationship between the frequencies in the intermodulation signal is "+" and "-", then the intermodulation signal may be (A+B), (A-B).

Optionally, if the order of the intermodulation signal is 3^{rd} order, the multiple information between each frequency in the intermodulation signal is 2 times, and the operation relationship information may be "+" and "-", then the intermodulation signal may be 2A+B, 2A-B, 2B+A, 2B-A, etc.

For example, in the uplink transmission frequency information combination 1, the frequency A is 935MHz, the frequency B is 960MHz, and the third-order intermodulation signals may be 2A-B=1870-960=910MHz, or 2B-A=1920-935=985MHz.

Optionally, the order of the intermodulation signal is 4^{th} order, and the multiple information and operation relationship information between each frequency in the intermodulation signal may be 3A+B, 3A-B, 3B+A, 3B-A, 2A+2B, or 2A -2B.

Optionally, the order of the intermodulation signal is 5^{th} order, and the multiple information and operation relationship information between each frequency in the intermodulation signal may be 4A+B, 4A-B, 4B+A, 4B-A, 3A+2B, 3A-28, 3B+2A, or 3B-2A.

It is noted that the above examples are only illustrations and cannot be used as limitations on the order of the intermodulation signal, the multiple information between each frequency, and the operational relationship information, etc., in embodiments of the present disclosure.

Optionally, the receiver sensitivity information may be the reference sensitivity power level of the receiver supported by the terminal device.

The reference sensitivity power level of the receiver may be the minimum average received power detected by the receiver of the terminal device, for example, it may be - 96.8dBM, etc., which is not limited in the present disclosure.

Optionally, the receiver sensitivity information may also be the current sensitivity of the receiver in the terminal device. For example, the current sensitivity of the receiver in the terminal device is -70dBM, etc., which is not limited in the present disclosure.

Optionally, the receiver sensitivity information may also be maximum receiver sensitivity degradation of the receiver supported by the terminal device.

The maximum receiver sensitivity degradation may be the maximum value that allows the receiver sensitivity of the terminal device to be reduced, for example, it may be 20dBM, 30dBM, etc., which is not limited in the present disclosure.

Optionally, the receiver sensitivity information may also be the current maximum sensitivity degradation of the receiver in the terminal device. For example, the maximum sensitivity degradation of the receiver may be 30dBM. The current maximum sensitivity degradation of the receiver may be 20dBM, or it may be 15dBM, etc., which is not limited in the present disclosure.

Optionally, the receiver sensitivity information may also be the current sensitivity degradation of the receiver in the terminal device, for example, it may be 10dBM, 12dBM, etc., which is not limited in the present disclosure.

It may be understood that the receiver sensitivity information may be one of the above, or may be multiple of the above, and the present disclosure is not limited thereto.

By implementing the embodiments of the present disclosure, the terminal device may transmit the first indication information to the network device when the specified transmitting conditions are met, so that the network device may learn the interference information of the terminal device, and the time-frequency domain corresponding to the interference information is adjusted to ensure reliable reception of downlink data, which provides guarantee for communication transmission, so as to improve the quality and efficiency of communication transmission.

Please refer to FIG. 4. FIG. 4 is a schematic flowchart of a method for controlling interference provided by an embodiment of the present disclosure. The method is executed by a terminal device. As shown in FIG. 4, the method may include but is not limited to the following steps.

In step 41, second indication information is received. The second indication information is used to indicate a specified transmitting condition.

Optionally, the specified transmitting condition may be the second indication information indicating that the first indication information is allowed to be transmitted. The first indication information is used to indicate interference information of the terminal device.

Optionally, the second indication information may include whether the terminal device is allowed to report information of the interference. If the specified transmitting condition is the second indication information indicating that transmitting the first indication information is allowed, then after receiving the second indication information, the terminal device may determine the frequency information on which it may report interference.

Optionally, the second indication information may include whether the terminal device is allowed to report interference uplink transmission frequency information. If the specified transmitting condition is the second indication information indicating that transmitting the first indication information is allowed, then after receiving the second indication information, the terminal device may determine the uplink transmission frequency information on which it may report interference.

Optionally, the second indication information may include an uplink transmission frequency information combination of whether the terminal device is allowed to report interference. If the specified transmitting condition is the second indication information indicating that transmitting the first indication information is allowed, then after receiving the second indication information, the terminal device may determine the uplink transmission frequency information combination for which it may report interference.

Optionally, the second indication information may include a frequency information combination of whether the terminal device is allowed to report interference. If the specified transmitting condition is the second indication information indicating that transmitting the first indication information is allowed, then after receiving the second indication information, the terminal device may determine the frequency information combination for which it may report interference.

Optionally, the second indication information may include whether the terminal device is allowed to report interference downlink reception frequency information. If the specified transmitting condition is the second indication information indicating that transmitting the first indication information is allowed, then after receiving the second indication information, the terminal device may determine that it may report the interfered downlink reception frequency information.

Optionally, the second indication information may include a correspondence between the uplink transmission frequency information and the downlink reception frequency information of whether the terminal device is allowed to report interference. If the specified transmitting condition is the second indication information indicating that transmitting the first indication information is allowed, then after receiving the second indication information, the terminal device may determine the corresponding relationship between the uplink transmission frequency information and the downlink reception frequency information that it may report interference.

Optionally, the second indication information may include a correspondence between the uplink transmission frequency information combination and the downlink reception frequency information whether the terminal device is allowed to report interference. If the specified transmitting condition is the second indication information indicating that transmitting the first indication information is allowed, then after receiving the second indication information, the terminal device may determine the corresponding relationship between the uplink transmission frequency information combination and the downlink reception frequency information.

Optionally, the second indication information may include receiver sensitivity information of whether the terminal device is allowed to report interference. If the specified transmitting condition is the second indication information indicating that transmitting the first indication information is allowed, then after receiving the second indication information, the terminal device may determine the receiver sensitivity information that it may report interference with.

It may be understood that the second indication information may include one or more of the above, so that when the specified transmitting condition is the second indication information indicating that transmitting the first indication information is allowed, the terminal device may determine one or more pieces of information that may be reported according to the received second indication information, and which is not limited in the present disclosure.

It is noted that the above examples are only illustrative and cannot be used as a limitation on the content included in the second instruction information and the specified transmitting conditions in embodiments of the present disclosure.

In step 42, the first indication information is transmitted in response to satisfying the specified transmitting condition, and the first indication information is used to indicate interference information of the terminal device.

It is noted that, for the specific content and implementation manner of the specified transmitting conditions, reference may be made to the descriptions of other embodiments of the present disclosure, and will not be described again here.

It is noted that, for the specific content and implementation method of the interference information of the terminal device, reference may be made to the descriptions of other embodiments of the present disclosure, and will not be described again here.

It is noted that, for the specific content and implementation manner of step 42, reference may be made to the descriptions of other embodiments of the present disclosure, and will not be described again here.

By implementing embodiments of the present disclosure, the terminal device may learn the specified transmitting conditions based on the received second indication information, and then may transmit the first indication information to the network device when the specified transmitting conditions are satisfied, so that the network device may obtain the interference information of the terminal device, and then adjust the time-frequency domain resources corresponding to the interference information, thereby ensuring reliable reception of downlink data, providing guarantee for communication transmission, and improving the quality and efficiency of communication transmission.

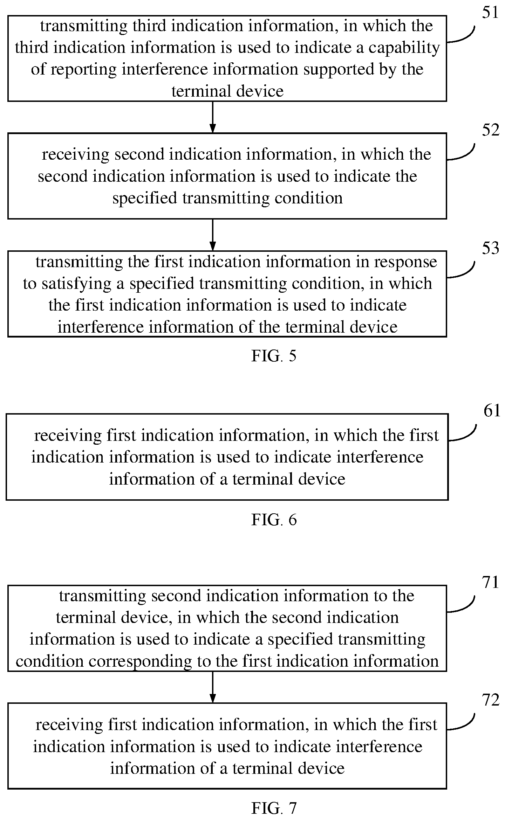

Please refer to FIG. 5. FIG. 5 is a schematic flowchart of a method for controlling interference provided by an embodiment of the present disclosure. The method is executed by a terminal device. As shown in FIG. 5, the method may include but is not limited to the following steps.

In step 51, third indication information is transmitted. The third indication information is used to indicate capability of reporting interference information supported by the terminal device.

Optionally, the third indication information may include capability of supporting to report an uplink transmission frequency information combination of the interference. Therefore, the terminal device may transmit the third indication information to the network device, so that the network device learns the terminal device's ability to support to report the uplink transmission frequency information combination of the interference, which is not limited in the present disclosure.

Optionally, the third indication information may be capability of supporting to report downlink reception frequency information of the interference. Therefore, the terminal device may transmit the third indication information to the network device, so that the network device may learn the ability of the terminal device to support to report downlink reception frequency information of the interference, which is not limited in the present disclosure.

Optionally, the third indication information may be capability of supporting to report downlink reception frequency information of the interference. Therefore, the terminal device may transmit the third indication information to the network device, so that the network device learns the terminal device's ability to support to report downlink reception frequency information of the interference, which is not limited in the present disclosure.

Optionally, the third indication information may be capability of supporting to report a correspondence between the uplink transmission frequency information and the downlink reception frequency information of the interference. Therefore, the terminal device may transmit the third indication information to the network device, so that the network device may learn the terminal device's ability to support to report a correspondence between the uplink transmission frequency information and the downlink reception frequency information of the interference, which is not limited in the present disclosure.

Optionally, the third indication information may be capability of supporting to report a correspondence between the uplink transmission frequency information combination and the downlink reception frequency information of the interference. Therefore, the terminal device may transmit the third indication information to the network device, so that the network device may learn the terminal device's ability to support to report a correspondence between the uplink transmission frequency information combination and the downlink reception frequency information of the interference which is not limited in the present disclosure.

Optionally, the third indication information may be capability of supporting to report receiver sensitivity information of the interference. Therefore, the terminal device may transmit the third indication information to the network device, so that the network device learns the terminal device's ability to support to report receiver sensitivity information of the interference, which is not limited in the present disclosure.

Optionally, the third indication information may be receiver sensitivity capability information of the terminal device. Therefore, the terminal device may transmit the third indication information to the network device, so that the network device may learn the receiver sensitivity information capability of the terminal device, which is not limited in the present disclosure.

Optionally, the receiver sensitivity capability information of the terminal device may be a receiver reference sensitivity power level. For example, it may be the minimum average received power detected by the receiver of the terminal device, etc. which is not limited in the present disclosure.

Optionally, the receiver sensitivity capability information of the terminal device may also be a maximum sensitivity degradation value. For example, the maximum sensitivity degradation value may be 20dBM, 30dBM, etc., which is not limited in the present disclosure.

In addition, the receiver sensitivity information may be the sensitivity capability information of the entire receiver in the terminal device. Optionally, the receiver sensitivity information may also be the sensitivity capability information of the receiver in a specific frequency band. Optionally, the receiver sensitivity information may also be sensitivity capability information of the receiver under a specific frequency band combination. Optionally, the receiver sensitivity information may also be the sensitivity capability information of the receiver in a specific frequency band corresponding to a specific frequency band combination, etc., which is nor limited by the present disclosure.

It may be understood that the receiver sensitivity capability information of the terminal device may be one of the above, or multiple of the above, etc., and the present disclosure is not limited thereto.

It is noted that the above examples are only illustrations and cannot be used as a limitation on the receiver sensitivity capability information of the terminal device in embodiments of the present disclosure.

In step 52, second indication information is received. The second indication information is used to indicate specified transmitting condition.

It is noted that, for the specific content and implementation manner of the second instruction information, reference may be made to the descriptions of other embodiments of the present disclosure, and will not be described again here.

It is noted that, for the specific content and implementation manner of the specified transmitting conditions, reference may be made to the descriptions of other embodiments of the present disclosure, and will not be described again here.

In step 53, in response to satisfying the specified transmitting condition, first indication information is transmitted. The first indication information is used to indicate interference information of the terminal device.

It is noted that, for the specific content and implementation method of the interference information of the terminal device, reference may be made to the descriptions of other embodiments of the present disclosure, and will not be described again here.

It is noted that for the specific contents and implementation methods of step 52 and step 53, reference may be made to the descriptions of other embodiments of the present disclosure, and will not be described again here.

By implementing embodiments of the present disclosure, the terminal device may transmit the third instruction information to the network device, so that the network device may learn the capability of reporting interference information supported by the terminal device, and then the terminal device may determine the specified transmitting conditions based on the received second instruction information. When the specified transmitting conditions are satisfied, the first indication information are transmitted to the network device so that the network device may learn the interference information of the terminal device, and then adjust the time-frequency domain resources corresponding to the interference information, thereby ensuring reliable reception of downlink data, which provides guarantee for communication transmission, so as to improve the quality and efficiency of communication transmission.

Please refer to FIG. 6, FIG. 6 is a schematic flowchart of a method for controlling interference provided by an embodiment of the present disclosure. The method is executed by a network device. As shown in FIG. 6, the method may include but is not limited to the following steps.

In step 61, first indication information is received. The first indication information is used to indicate interference information of the terminal device.

Generally, in a communication system, if the frequency of the uplink data transmitted by a terminal device is too close to the frequency of the downlink data it receives, harmonics or intermodulation interference may occur in the downlink data it receives, which may cause downlink data of the terminal device cannot be received normally, thereby affecting communication transmission.

In embodiments of the present disclosure, the network device may receive the first indication information transmitted by the terminal device, and then learn the interference information of the terminal device according to the instructions of the first indication information, so that the time-frequency domain resources corresponding to the interference information may be adjusted, thereby ensuring reliable reception of downlink data, which provides guarantee for communication transmission, so as to improve the quality and efficiency of communication transmission.

Optionally, the interference information of the terminal device may be uplink transmission frequency information.

Optionally, the interference information of the terminal device may be an uplink transmission frequency information combination.

Optionally, the interference information of the terminal device may be the uplink transmission frequency information and a downlink reception frequency information combination.

Optionally, the interference information of the terminal device may be downlink reception frequency information.

Optionally, the interference information of the terminal device may be a correspondence between the uplink transmission frequency information and the downlink reception frequency information.

Optionally, the interference information of the terminal device may be a correspondence between the uplink transmission frequency information combination and the downlink reception frequency information.

Optionally, the interference information of the terminal device may be receiver sensitivity information.

Optionally, the interference information of the terminal device may be an interfering party's radio technical indication and an interfered party's radio technical indication.

It may be understood that the first indication information may indicate the above-mentioned one kind of interference information, or may also indicate the above-mentioned multiple interference information, etc., which is not limited in the present disclosure.

It is noted that, for the specific content and implementation method of the interference information of the terminal device, reference may be made to the descriptions of other embodiments of the present disclosure, and will not be described again here.

By implementing embodiments of the present disclosure, the network device may receive the first indication information transmitted by the terminal device, and then learn the interference information of the terminal device according to the instructions of the first indication information, and then adjust the time-frequency domain resources corresponding to the interference information, thereby ensuring reliable reception of downlink data, which provides guarantee for communication transmission, so as to improve the quality and efficiency of communication transmission.

Please refer to FIG. 7, which is a schematic flowchart of a method for controlling interference provided by an embodiment of the present disclosure. The method is executed by a network device. As shown in Figure 7, the method may include but is not limited to the following steps.

In step 71, second indication information is transmitted to the terminal device. The second indication information is used to indicate a specified transmitting condition corresponding to the first indication information.

Optionally, the specified transmitting condition may be the second indication information indicating that transmitting the first indication information is allowed.

Optionally, the specified transmitting condition may also be a receiver sensitivity being less than or equal to a first threshold value.

Optionally, the specified transmitting condition may also a receiver sensitivity degradation value being greater than or equal to a second threshold value.

Optionally, the specified transmitting condition may also a first measurement result being less than or equal to a third threshold value.

Optionally, the specified transmitting condition may also a second measurement result being greater than or equal to a fourth threshold value.

It may be understood that the specified transmitting condition may be one of the above, or may be multiple of the above, etc., and which is not limited in the present disclosure.

It is noted that, for the specific content and implementation manner of the specified transmitting conditions, reference may be made to the descriptions of other embodiments of the present disclosure, and will not be described again here.

Optionally, the second indication information may include whether the terminal device is allowed to report information of the interference.

Optionally, the second indication information may include whether the terminal device is allowed to report uplink transmission frequency information of the interference.

Optionally, the uplink transmission frequency information may include an uplink transmission frequency and/or harmonic signal information of the uplink transmission frequency.

Optionally, the harmonic signal information of the uplink transmission frequency may include at least one of multiple of a harmonic signal relative to a fundamental signal; and a frequency range of the harmonic signal.

Optionally, the second indication information may include whether the terminal device is allowed to report an uplink transmission frequency information combination of the interference.

Optionally, the second indication information may include whether the terminal device is allowed to report a frequency information combination of the interference.

Optionally, the second indication information may include whether the terminal device is allowed to report downlink reception frequency information of the interference.

Optionally, the second indication information may include whether the terminal device is allowed to report a correspondence between the uplink transmission frequency information and the downlink reception frequency information of the interference.

Optionally, the second indication information may include whether the terminal device is allowed to report a correspondence between the uplink transmission frequency information combination and the downlink reception frequency information of the interference.

Optionally, the second indication information may include whether the terminal device is allowed to report receiver sensitivity information of the interference.

Optionally, the second indication information may include one of the above items, or may include multiple items above. For example, the second indication information may include whether the terminal device is allowed to report the frequency information combination of the interference, and whether the terminal device is allowed to report the downlink reception frequency information of the interference; or, the second indication information may also include whether the terminal device is allowed to report the a correspondence between the uplink transmission frequency information and the downlink reception frequency information of the interference, whether the terminal device is allowed to report a correspondence between the uplink transmission frequency information combination and the downlink reception frequency information of the interference, and whether the terminal device is allowed to report receiver sensitivity information of the interference, which is not limited in the present disclosure.

In step 72, first indication information is received. The first indication information is used to indicate interference information of the terminal device.

Optionally, the interference information may include at least one of: uplink transmission frequency information; an uplink transmission frequency information combination; the uplink transmission frequency information and a downlink reception frequency information combination; downlink reception frequency information; a correspondence between the uplink transmission frequency information and the downlink reception frequency information; a correspondence between the uplink transmission frequency information combination and the downlink reception frequency information; receiver sensitivity information; and an interfering party's radio technical indication and an interfered party's radio technical indication.

It is noted that, for the specific content and implementation method of the interference information of the terminal device, reference may be made to the descriptions of other embodiments of the present disclosure, and will not be described again here.

Optionally, the frequency information may include at least one of frequency point information; bandwidth information; starting frequency point information; ending frequency point information; starting physical resource block; ending physical resource block; and bandwidth section information.

It is noted that, for the specific content and implementation manner of the frequency information, reference may be made to the descriptions of other embodiments of the present disclosure, and will not be described again here.

Optionally, the uplink transmission frequency information combination may include a plurality of uplink transmission frequencies and/or intermodulation signal information between the plurality of the uplink transmission frequencies.

It is noted that, for the specific content and implementation method of the uplink transmission frequency information combination, reference may be made to the descriptions of other embodiments of the present disclosure, and will not be described again here.

Optionally, the intermodulation signal information between the plurality of the uplink transmission frequencies may include at least one of an order of the intermodulation signal; multiple information between individual frequency in the intermodulation signal; and operational relationship information between individual frequencies in the intermodulation signal.

It is noted that, for the specific content and implementation method of the intermodulation signal information between the plurality of uplink transmission frequencies, reference may be made to the descriptions of other embodiments of the present disclosure, and will not be described again here.

Optionally, the receiver sensitivity information may include at least one of a receiver reference sensitivity power level supported by the terminal device; receiver maximum sensitivity degradation supported by the terminal device; current maximum sensitivity degradation of the receiver in the terminal device; and current sensitivity degradation of the receiver in the terminal device.

It is noted that for the specific content and implementation method of the receiver sensitivity information, reference may be made to the descriptions of other embodiments of the present disclosure, and will not be described again here.

By implementing embodiments of the present disclosure, the network device may transmit the second instruction information to the terminal device, so that the terminal device may learn the specified transmitting condition corresponding to the first instruction information, and then may receive the first instruction information, so that the terminal device may receive the first instruction information according to the first instruction. According to the instructions of the information, the interference information of the terminal device is learned, and then the time-frequency domain resources corresponding to the interference information are adjusted, thereby ensuring the reliable reception of downlink data, which provides guarantee for communication transmission, so as to improve the quality and efficiency of communication transmission.

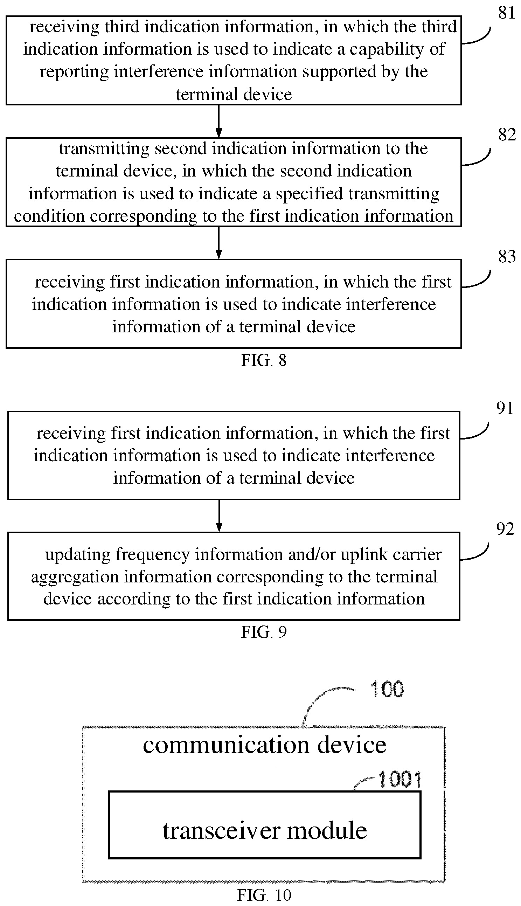

Please refer to FIG. 8. FIG. 8 is a schematic flowchart of a method for controlling interference provided by an embodiment of the present disclosure. The method is executed by a network device. As shown in FIG. 8, the method may include but is not limited to the following steps.

In step 81, third indication information is received. The third indication information is used to indicate capability of supporting to report interference information supported by the terminal device.

Optionally, the third indication information may include capability of supporting to report uplink transmission frequency information of the interference.

Optionally, the third indication information may include capability of supporting to report an uplink transmission frequency information combination of the interference.

Optionally, the third indication information may include capability of supporting to report downlink reception frequency information of the interference.

Optionally, the third indication information may include capability of supporting to report a correspondence between the uplink transmission frequency information and the downlink reception frequency information of the interference.

Optionally, the third indication information may include capability of supporting to report a correspondence between the uplink transmission frequency information combination and the downlink reception frequency information of the interference.

Optionally, the third indication information may include capability of supporting to report receiver sensitivity information of the interference.

Optionally, the third indication information may include receiver sensitivity capability information of the terminal device.

Optionally, the receiver sensitivity capability information of the terminal device may include at least one of a receiver reference sensitivity power level; and a maximum sensitivity degradation value.

It is noted that, for the specific content and implementation method of the receiver sensitivity capability information of the terminal device, reference may be made to the descriptions of other embodiments of the present disclosure, and will not be described again here.

It may be understood that the third indication information may include one of the above, or may include multiple of the above, which is not limited in the present disclosure.

It is noted that, for the specific content and implementation manner of the third indication information, reference may be made to the descriptions of other embodiments of the present disclosure, and will not be described again here.

In step 82, second indication information is transmitted to the terminal device. The second indication information is used to indicate a specified transmitting condition corresponding to the first indication information.

It is noted that, for the specific content and implementation manner of the second instruction information and the specified transmitting conditions, reference may be made to the descriptions of other embodiments of the present disclosure, and will not be described again here.

In step 83, first indication information is received. The first indication information is used to indicate interference information of the terminal device.

It is noted that, for the specific content and implementation manner of step 82 and step 83, reference may be made to the descriptions of other embodiments of the present disclosure, and will not be described again here.

By implementing embodiments of the present disclosure, the network device may learn the capability of reporting interference information supported by the terminal device based on the received third indication information, and then may transmit the second indication information to the terminal device so that the terminal device may learn the first indication information corresponding to the specified transmitting condition, the interference information of the terminal device may be learned based on the received first indication information, and then the time-frequency domain resources corresponding to the interference information may be adjusted, thereby ensuring reliable reception of downlink data, which provides communication transmission guarantee, so as improve the quality and efficiency of communication transmission.

Please refer to FIG. 9. FIG. 9 is a schematic flowchart of a method for controlling interference provided by an embodiment of the present disclosure. The method is executed by a network device. As shown in FIG. 9, the method may include but is not limited to the following steps.

In step 91, first indication information is received. The first indication information is used to indicate interference information of the terminal device.

It is noted that, for the specific content and implementation method of the interference information of the terminal device, reference may be made to the descriptions of other embodiments of the present disclosure, and will not be described again here.

It is noted that, for the specific content and implementation manner of step 91, reference may be made to the descriptions of other embodiments of the present disclosure, and will not be described again here.

In step 92, frequency information and/or uplink carrier aggregation information corresponding to the terminal device are updated according to the first indication information.

Optionally, the network device may stagger a transmitting time of the uplink sending frequency indicated by the first indication information and a receiving time of the downlink reception frequency.

For example, if the transmitting time of the uplink transmission frequency indicated by the first indication information is 11, the receiving time of the downlink reception frequency may be determined to be any time different from t1, such as t2, t3, etc., which is not limited in the present disclosure.

Optionally, the network device may also invalidate the uplink transmission frequency indicated by the first indication information, or one or more uplink transmission frequencies in the uplink transmission frequency information combination.

For example, if the uplink transmission frequency indicated by the first indication information is F 1, the network device may instruct the terminal device to use other frequency resources different from F1 for uplink transmission, so as to invalidate the uplink transmission frequency F1, etc. which is not limited in the present disclosure.

Optionally, if the uplink transmission frequencies in the uplink transmission frequency information combination indicated by the first indication information are F1, F2 and F3, the network device may instruct the terminal device to use other frequency resources different from F1 for uplink transmission, so that the uplink transmission frequency F1 is invalid; or the terminal device may also be instructed to use other frequency resources different from F1 and F2 for uplink transmission, so that the uplink transmission frequencies F1 and F2 are invalid, etc., which is not limited in the present disclosure.

Optionally, the transmitting time of all or part of the uplink frequencies in the uplink transmission frequency information combination indicated by the first indication information may also be staggered.

For example, if the uplink frequencies in the uplink transmission frequency information combination indicated by the first indication information are F1 and F2, the network device may stagger the transmitting time of the uplink frequency F1 and the transmitting time of the uplink frequency F2, thereby avoiding corresponding intermodulation interference.

Optionally, the uplink frequencies in the uplink transmission frequency combination indicated by the first indication information are F1, F2, and F3, and the network device may stagger the transmitting times of F1, F2, and F3; or stagger the transmitting time of F1 with the transmitting time of F2 and F3; or stagger the transmitting time of F2 with the transmitting time of F1 and F3; or stagger the transmitting time of F3 with the transmitting time of F1 and F2, etc., which is not limited in the present disclosure.

Optionally, the network device may also invalidate the downlink reception frequency indicated by the first indication information.

For example, if the first indication information indicates that the downlink reception frequency of the interference is F1, the network device may invalidate the downlink reception frequency F1 indicated by the first indication information. For example, instead of using F1 to transmit downlink reception data, other frequency far away from F1 is used to transmit downlink data, etc., which is not limited in the present disclosure.

Optionally, the network device may also instruct the terminal device to reduce the uplink transmission power.

It may be understood that the greater the uplink transmission power, the greater the interference to downlink reception. Therefore, the interference to the terminal device may be reduced by instructing the terminal device to reduce the uplink transmission power.

It may be understood that the network device may adjust the time-frequency domain resources corresponding to the interference information through the above one, or may also adjust the time-frequency domain resources corresponding to the interference information through the above multiple items, etc., which is not limited in the present disclosure.

It is noted that the above examples are only illustrative and cannot be used as a limitation on the manner in which the network device updates the frequency information and/or uplink carrier aggregation information corresponding to the terminal device in embodiments of the present disclosure.

By implementing embodiments of the present disclosure, the network device may first learn the interference information of the terminal device according to the received first instruction information, and update the frequency information and/or uplink carrier aggregation information corresponding to the terminal device according to the first instruction information, thereby ensuring reliable reception of downlink data, which provides guarantee for communication transmission, so as to improve the quality and efficiency of communication transmission.

In the above-mentioned embodiments of the present disclosure, the methods provided by embodiments of the present disclosure are introduced from the perspectives of network device and terminal device. In order to implement the functions in the methods provided by the above-mentioned embodiments of the present disclosure, network devices and terminal devices may include hardware structures and software modules to implement the above functions in the form of hardware structures, software modules, or hardware structures plus software modules. A certain function among the above-mentioned functions may be executed by a hardware structure, a software module, or a combination of a hardware structure and a software module.

Please refer to FIG. 100, it is a schematic diagram of a communication device 100 provided by an embodiment of the present disclosure. The communication device 100 shown in FIG. 100 may include a transceiver module 1001.

The transceiver module 1001 may include a transmitting module and/or a receiving module. The transmitting module is configured to implement the transmitting function, and the receiving module is configured to implement the receiving function. The transceiver module 1001 may implement the transmitting function and/or the receiving function.

It may be understood that the communication device 100 may be a terminal device, a device in the terminal device, or a device that may be used in conjunction with the terminal device.

The communication device 100 is configured on the terminal device side. The device includes:
the transceiver module 1001 configured to transmit first indication information. The first indication information is used to indicate interference information of the terminal device.

Optionally, the transceiver module 1001 is specifically configured to:
transmit the first indication information in response to satisfying a specified transmitting condition.

Optionally, the transceiver module 1001 is further configured to:
receive second indication information, in which the second indication information is used to indicate the specified transmitting condition; or
determine the specified transmitting condition according to a protocol.

Optionally, the specified transmitting condition include at least one of the following:
the second indication information indicating that transmitting the first indication information is allowed;
a receiver sensitivity being less than or equal to a first threshold value;
a receiver sensitivity degradation value being greater than or equal to a second threshold value;
a first measurement result being less than or equal to a third threshold value; and
a second measurement result being greater than or equal to a fourth threshold value.

Optionally, the second indication information includes at least one of the following:
whether the terminal device is allowed to report frequency information of the interference;
whether the terminal device is allowed to report uplink transmission frequency information of the interference;
whether the terminal device is allowed to report an uplink transmission frequency information combination of the interference;
whether the terminal device is allowed to report a frequency information combination of the interference;
whether the terminal device is allowed to report downlink reception frequency information of the interference;
whether the terminal device is allowed to report a correspondence between the uplink transmission frequency information and the downlink reception frequency information of the interference;
whether the terminal device is allowed to report a correspondence between the uplink transmission frequency information combination and the downlink reception frequency information of the interference; and
whether the terminal device is allowed to report receiver sensitivity information of the interference.

Optionally, the transceiver module 1001 is further configured to:
transmit third indication information. The third indication information is used to indicate a capability of reporting interference information supported by the terminal device.

Optionally, the third indication information includes at least one of the following:
capability of supporting to report uplink transmission frequency information of the interference;
capability of supporting to report an uplink transmission frequency information combination of the interference;
capability of supporting to report downlink reception frequency information of the interference;
capability of supporting to report a correspondence between the uplink transmission frequency information and the downlink reception frequency information of the interference;
capability of supporting to report a correspondence between the uplink transmission frequency information combination and the downlink reception frequency information of the interference;
capability of supporting to report receiver sensitivity information of the interference; and
receiver sensitivity capability information of the terminal device.

Optionally, the receiver sensitivity capability information of the terminal device comprises at least one of the following:
a receiver reference sensitivity power level; and
a maximum sensitivity degradation value.

Optionally, the interference information includes at least one of the following:
uplink transmission frequency information;
an uplink transmission frequency information combination;
the uplink transmission frequency information and a downlink reception frequency information combination;
downlink reception frequency information;
a correspondence between the uplink transmission frequency information and the downlink reception frequency information;
a correspondence between the uplink transmission frequency information combination and the downlink reception frequency information;
receiver sensitivity information; and
an interfering party's radio technical indication and an interfered party's radio technical indication.

Optionally, the frequency information includes at least one of the following:
frequency point information;
bandwidth information;
starting frequency point information;
ending frequency point information;
starting physical resource block;
ending physical resource block; and,
bandwidth section information.

Optionally, the uplink transmission frequency information includes an uplink transmission frequency and/or harmonic signal information of the uplink transmission frequency.

Optionally, the harmonic signal information of the uplink transmission frequency includes at least one of the following:
multiple of a harmonic signal relative to a fundamental signal; and
a frequency range of the harmonic signal.

Optionally, the uplink transmission frequency information combination include a plurality of uplink transmission frequencies and/or intermodulation signal information between the plurality of the uplink transmission frequencies.

Optionally, the intermodulation signal information between the plurality of uplink transmission frequencies includes at least one of the following:
an order of the intermodulation signal;
multiple information between individual frequencies in the intermodulation signal; and
operational relationship information between individual frequencies in the intermodulation signal.

Optionally, the receiver sensitivity information includes at least one of the following:
a receiver reference sensitivity power level supported by the terminal device;
current sensitivity of a receiver in the terminal device;
receiver maximum sensitivity degradation supported by the terminal device;
current maximum sensitivity degradation of the receiver in the terminal device; and
current sensitivity degradation of the receiver in the terminal device.

In the communication device provided by the present disclosure, the terminal device may transmit the first instruction information to the network device, so that the network device may learn the interference information of the terminal device, and then adjust the time-frequency domain resources corresponding to the interference information, thereby ensuring the reliable reception of the downlink data, which provides guarantee for communication transmission, so as to improve the quality and efficiency of communication transmission.

It may be understood that the communication device 100 may also be a network device, a device in a network device, or a device that may be used in conjunction with a network device.

The communication device 100 is configured on the network device side. The device includes:
the transceiver module 1001 configured to receive first indication information. The first indication information is used to indicate interference information of the terminal device.

Optionally, the transceiver module 1001 is further configured to:
transmit second indication information to the terminal device. The second indication information is used to indicate a specified transmitting condition corresponding to the first indication information.

Optionally, the specified transmitting condition include at least one of the following:
the second indication information indicating that transmitting the first indication information is allowed;
a receiver sensitivity being less than or equal to a first threshold value;
a receiver sensitivity degradation value being greater than or equal to a second threshold value;
a first measurement result being less than or equal to a third threshold value; and
a second measurement result being greater than or equal to a fourth threshold value.

Optionally, the second indication information includes at least one of the following:
whether the terminal device is allowed to report frequency information of the interference;
whether the terminal device is allowed to report uplink transmission frequency information of the interference;
whether the terminal device is allowed to report an uplink transmission frequency information combination of the interference;
whether the terminal device is allowed to report an information of the interference combination of the interference;
whether the terminal device is allowed to report downlink reception frequency information of the interference;
whether the terminal device is allowed to report a correspondence between the uplink transmission frequency information and the downlink reception frequency information of the interference;
whether the terminal device is allowed to report a correspondence between the uplink transmission frequency information combination and the downlink reception frequency information of the interference; and
whether the terminal device is allowed to report receiver sensitivity information of the interference.

Optionally, the transceiver module 1001 is further configured to:
receive third indication information. The third indication information is used to indicate a capability of reporting interference information supported by the terminal device.

Optionally, the third indication information includes at least one of the following:
capability of supporting to report uplink transmission frequency information of the interference;
capability of supporting to report an uplink transmission frequency information combination of the interference;
capability of supporting to report downlink reception frequency information of the interference;
capability of supporting to report a correspondence between the uplink transmission frequency information and the downlink reception frequency information of the interference;
capability of supporting to report a correspondence between the uplink transmission frequency information combination and the downlink reception frequency information of the interference;
capability of supporting to report receiver sensitivity information of the interference; and
receiver sensitivity capability information of the terminal device.

Optionally, the receiver sensitivity capability information of the terminal device includes at least one of the following:
a receiver reference sensitivity power level; and
a maximum sensitivity degradation value.

Optionally, the interference information includes at least one of the following:
uplink transmission frequency information;
an uplink transmission frequency information combination;
the uplink transmission frequency information and a downlink reception frequency information combination;
downlink reception frequency information;
a correspondence between the uplink transmission frequency information and the downlink reception frequency information;
a correspondence between the uplink transmission frequency information combination and the downlink reception frequency information;
receiver sensitivity information; and
an interfering party's radio technical indication and an interfered party's radio technical indication.

Optionally, the frequency information includes at least one of the following:
frequency point information;
bandwidth information;
starting frequency point information;
ending frequency point information;
starting physical resource block;
ending physical resource block; and,
bandwidth section information.

Optionally, the uplink transmission frequency information includes an uplink transmission frequency and/or harmonic signal information of the uplink transmission frequency.

Optionally, the harmonic signal information of the uplink transmission frequency includes at least one of the following:
multiple of a harmonic signal relative to a fundamental signal; and
a frequency range of the harmonic signal.

Optionally, the uplink transmission frequency information combination includes a plurality of uplink transmission frequencies and/or intermodulation signal information between the plurality of the uplink transmission frequencies.

Optionally, the intermodulation signal information between the plurality of the uplink transmission frequencies includes at least one of the following:
an order of the intermodulation signal;
multiple information between individual frequencies in the intermodulation signal; and
operational relationship information between individual frequencies in the intermodulation signal.

Optionally, the receiver sensitivity information includes at least one of the following:
a receiver reference sensitivity power level supported by the terminal device;
receiver maximum sensitivity degradation supported by the terminal device;
current maximum sensitivity degradation of the receiver in the terminal device; and
current sensitivity degradation of the receiver in the terminal device.

Optionally, the above-mentioned device 100 may also include:
a processing module configured to update frequency information and/or uplink carrier aggregation information corresponding to the terminal device according to the first indication information.

Optionally, the processing module may be specifically configured to:
stagger a transmitting time of the uplink transmission frequency indicated by the first indication information and a receiving time of the downlink reception frequency;
invalidate the uplink transmission frequency indicated by the first indication information, or one or more uplink transmission frequencies in the uplink transmission frequency information combination;
stagger a transmitting time of all or part of the uplink frequencies in the uplink transmission frequency information combination indicated by the first indication information;
invalidate the downlink reception frequency indicated by the first indication information; and,
instruct the terminal device to reduce an uplink transmission power.

With the communication device provided by the present disclosure, the network device may receive the first indication information transmitted by the terminal device, and then learn the interference information of the terminal device according to the instructions of the first indication information, and then adjust the time-frequency domain resources corresponding to the interference information, thereby ensuring reliable reception of the downlink data, which provides guarantee for communication transmission, so as to improve the quality and efficiency of communication transmission.

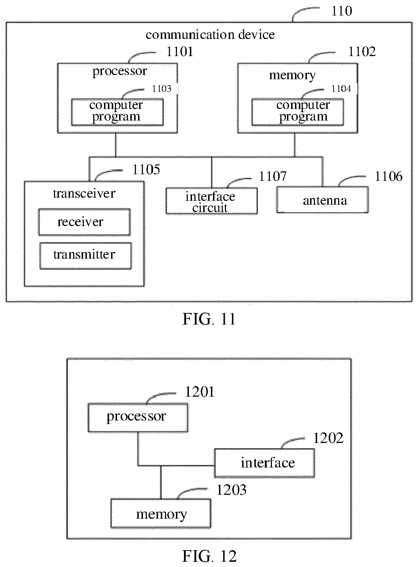

Please refer to FIG. 11, it is a schematic diagram of another communication device 110 provided by an embodiment of the present disclosure. The communication device 110 may be a network device, a terminal device, a chip, a chip system, or a processor that supports a network device to implement the above method, or a chip, a chip system, or a processor that supports a terminal device to implement the above method. The device may be configured to implement the method described in the above method embodiments. For details, please refer to the description in the above method embodiments.

The communication device 110 may include one or more processors 1101. The processor 1101 may be a general-purpose processor or a special-purpose processor, or the like. For example, it may be a baseband processor or a central processing unit. The baseband processor may be configured to process communication protocols and communication data. The central processor may be configured to control communication devices (such as base stations, baseband chips, terminal device, terminal device chips, DU or CU, etc.) to execute computer programs, and process data for computer programs.

Optionally, the communication device 110 may also include one or more memories 1102, on which a computer program 1104 may be stored. The processor 1101 executes the computer program 1104, so that the communication device 110 performs the steps described in the above method embodiments. Optionally, the memory 1102 may also store data. The communication device 110 and the memory 1102 may be provided separately or integrated together.

Optionally, the communication device 110 may also include a transceiver 1105 and an antenna 1106. The transceiver 1105 may be called a transceiver unit, a transceiver, a transceiver circuit, etc., and is configured to implement transceiver functions. The transceiver 1105 may include a receiver and a transmitter. The receiver may be called a receiver or a receiving circuit, etc., configured to implement the receiving function; the transmitter may be called a transmitter, a transmitting circuit, etc., configured to implement the transmitting function.

Optionally, the communication device 110 may also include one or more interface circuits 1107. The interface circuit 1107 is configured to receive code instructions and transmit them to the processor 1101. The processor 1101 executes the code instructions to cause the communication device 110 to perform the method described in the above-mentioned method embodiments.

The communication device 110 is a terminal device. The transceiver 1105 is configured to perform step 21 in FIG. 2; step 31 in FIG. 3; step 41 in FIG. 4; step 42 in FIG. 4; step 51 in FIG. 5; step 52 in FIG. 5; or step 53 in FIG. 5.

The communication device 110 is a network device. The transceiver 1105 is configured to perform step 61 in FIG. 6; step 71 in FIG. 7; step 72 in FIG. 7; step 81 in FIG. 8; step 82 in FIG. 8; step 83 in FIG. 9; or step 91 in FIG. 9. The processor 1301 is configured to execute step 92 in FIG. 9.

In one implementation, the processor 1101 may include a transceiver for implementing receiving and transmitting functions. For example, the transceiver may be a transceiver circuit, an interface, or an interface circuit. The transceiver circuits, interfaces or the interface circuits configured to implement the receiving and transmitting functions may be separate or integrated together. The above-mentioned transceiver circuit, interface or interface circuit may be configured for reading and writing codes/data, or the above-mentioned transceiver circuit, interface or interface circuit may be used for signal transmission or transfer.

In one implementation, the processor 1101 may store a computer program 1103, and the computer program 1103 runs on the processor 1101, causing the communication device 110 to perform the method described in the above-mentioned method embodiments. The computer program 1103 may be embedded in the processor 1101, in which case the processor 1101 may be implemented by hardware.

In one implementation, the communication device may include a circuit, and the circuit may implement sending or receiving or communication functions in the above-mentioned method embodiments. The processor and the transceiver described in the present disclosure may be implemented in an integrated circuits (IC), an analog IC, a radio frequency integrated circuits (RFIC), a mixed signal (IC), an application specific integrated circuits (ASIC), a printed circuit boards (PCB), electronic equipment, etc. The processor and the transceiver may also be manufactured using various IC process technologies, such as a complementary metal oxide semiconductor (CMOS), a N-type metal-oxide-semiconductor (NMOS), a P-type metal oxide semiconductor (PMOS), a bipolar junction transistor (BJT), a bipolar CMOS (BiCMOS), a silicon germanium (SiGe), a gallium arsenide (GaAs), etc.

The communication device described in the above-mentioned embodiments may be a network device or a terminal device, but the scope of the communication device described in the present disclosure is not limited thereto, and the structure of the communication device may not be limited by FIG. 11. The communication device may be a stand-alone device or may be part of a larger device. For example, the communication device may be:
(1) independent integrated circuit (IC), or chip, or chip system or subsystem;
(2) a collection of one or more ICs, or, the IC collection may also include storage components for storing data and computer programs;
(3) ASIC, such as modem;
(4) modules that may be embedded in other devices;
(5) receivers, terminal device, intelligent terminal device, cellular phones, wireless equipment, handheld devices, mobile units, vehicle-mounted equipment, network device, cloud equipment, artificial intelligence equipment, etc.;
(6) others.

In case that the communication device may be a chip or a chip system, refer to the schematic diagram of the chip shown in FIG. 12. The chip shown in FIG. 12 includes a processor 1201 and an interface 1202. The number of processors 1201 may be one or more, and the number of interfaces 1202 may be multiple.

For the case where the chip is configured to implement the functions of the terminal device in embodiments of the present disclosure:

The interface 1202 is configured to perform step 21 in FIG. 2; step 31 in FIG. 3; step 41 in FIG. 4; step 42 in FIG. 4; step 51 in FIG. 5; step 52 in FIG. 5: or step 53 in FIG. 5. For the case where the chip is configured to implement the functions of the network device in embodiments of the present disclosure.

The interface 1202 is configured to perform step 61 in FIG. 6; step 71 in FIG. 7; step 72 in FIG. 7; step 81 in FIG. 8; step 82 in FIG. 8; step 83 in FIG. 8; or step 91 in FIG.9.

Optionally, the chip also includes a memory 1203, which is configured to store necessary computer programs and data.

Those skilled in the art may also understand that the various illustrative logical blocks and steps listed in embodiments of the present disclosure may be implemented by electronic hardware, computer software, or a combination of both. Whether such functionality is implemented in hardware or software depends on the specific application and overall system design requirements. Those skilled in the art may use various methods to implement the described functions for each specific application, but such implementation should not be understood as exceeding the scope of protection of embodiments of the present disclosure.

Embodiments of the present disclosure also provide a system for controlling interference. The system includes a communication device as a terminal device and a communication device as a network device in embodiments of FIG. 10, or the system includes a terminal device as a terminal device in embodiments of FIG. 11 and a communication device as a network device.

The present disclosure also provides a readable storage medium on which instructions are stored. When the instructions are executed by a computer, the functions of any one of the above-mentioned method embodiments are implemented.

The present disclosure also provides a computer program product, when the computer program product is executed by a computer, the functions of any one of the above-mentioned method embodiments are implemented.

In the above-mentioned embodiments, it may be implemented in whole or in part by software, hardware, firmware, or any combination thereof. When implemented using software, it may be implemented in whole or in part in the form of a computer program product. A computer program product includes one or more computer programs. When a computer program is loaded and executed on a computer, processes or functions according to embodiments of the present disclosure are generated in whole or in part. The computer may be a general purpose computer, a special purpose computer, a computer network, or other programmable device. The computer program may be stored in or transmitted from one computer-readable storage medium to another computer-readable storage medium, for example, the computer program may be transmitted from a website, a computer, a server or a data center via a wireline (e.g. coaxial cable, optical fiber, digital subscriber line (DSL)) or wireless (such as infrared, wireless, microwave, etc.) means to transmit to another website, computer, server or data center. The computer-readable storage media may be any available media that may be accessed by a computer or a data storage device such as a server, data center, or other integrated media that contains one or more available media. The usable media may be magnetic media (e.g., floppy disks, hard disks, tapes), optical media (e.g., high-density digital video discs (DVDs)), or semiconductor media (e.g., solid state disks (SSDs)) and the like.

Those skilled in the art may understand that the first, second, and other numerical numbers involved in the present disclosure are only for convenience of description and are not used to limit the scope of embodiments of the present disclosure and also indicate the order.

At least one in the present disclosure may also be described as one or more, and the plurality may be two, three, four or more, and the present disclosure is not limited. In embodiments of the present disclosure, for a technical feature, the technical feature is distinguished by "first", "second", "third", "A", "B", "C" and "D", etc. The technical features described in "first", "second", "third", "A", "B", "C" and "D" are in no particular order or order.

The corresponding relationships shown in each table in the present disclosure may be configured or predefined. The values of the information in each table are only examples and may be configured as other values, which is not limited in the present disclosure. When configuring the correspondence between information and each parameter, it is not necessarily required to configure all the correspondences shown in each table. For example, in the table in the present disclosure, the corresponding relationships shown in some rows may not be configured. For another example, appropriate deformation adjustments may be made based on the above-mentioned table, such as splitting, merging, etc. The names of the parameters shown in the titles of the above tables may also be other names understandable by the communication device, and the values or expressions of the parameters may also be other values or expressions understandable by the communication device. When implementing the above tables, other data structures may also be used, such as arrays, queues, containers, stacks, linear lists, pointers, linked lists, trees, graphs, structures, classes, heaps, hash tables or hash tables.

Predefinition in the present disclosure may be understood as definition, pre-definition, storage, pre-storage, pre-negotiation, pre-configuration, solidification, or pre-burning.

Those skilled in the art will appreciate that the units and algorithm steps of each example described in conjunction with embodiments disclosed herein may be implemented with electronic hardware, or a combination of computer software and electronic hardware. Whether these functions are performed in hardware or software depends on the specific application and design constraints of the technical solution. Those skilled in the art may implement the described functionality using different methods for each specific application, but such implementations should not be considered to be beyond the scope of the present disclosure.

Those skilled in the art may clearly understand that for the convenience and simplicity of description, the specific working processes of the systems, devices and units described above may be referred to the corresponding processes in the foregoing method embodiments, and will not be described again here.

The above are only specific embodiments of the present disclosure, but the scope of protection of the present disclosure is not limited thereto. Any skilled in the art may easily think of changes or substitutions within the technical scope disclosed in the present disclosure, which should be covered by the scope of protection of the present disclosure. Therefore, the scope of protection of the present disclosure should be subject to the scope of protection of the claims.

## Claims

1. A method for controlling interference, performed by a terminal device and comprising:
transmitting first indication information, wherein the first indication information is used to indicate interference information of the terminal device.

2. The method according to claim 1, wherein transmitting the first indication information comprises:
transmitting the first indication information in response to satisfying a specified transmitting condition.

3. The method according to claim 2, further comprising:
receiving second indication information, wherein the second indication information is used to indicate the specified transmitting condition; or
determining the specified sending condition according to a protocol.

4. The method according to claim 2 or 3, wherein the specified transmitting condition comprises at least one of:
the second indication information indicating that transmitting the first indication information is allowed;
a receiver sensitivity being less than or equal to a first threshold value;
a receiver sensitivity degradation value being greater than or equal to a second threshold value;
a first measurement result being less than or equal to a third threshold value; and
a second measurement result being greater than or equal to a fourth threshold value.

5. The method according to claim 4, wherein the second indication information comprises at least one of:
whether the terminal device is allowed to report frequency information of the interference;
whether the terminal device is allowed to report uplink transmission frequency information of the interference;
whether the terminal device is allowed to report an uplink transmission frequency information combination of the interference;
whether the terminal device is allowed to report a frequency information combination of the interference;
whether the terminal device is allowed to report downlink reception frequency information of the interference;
whether the terminal device is allowed to report a correspondence between the uplink transmission frequency information and the downlink reception frequency information of the interference;
whether the terminal device is allowed to report a correspondence between the uplink transmission frequency information combination and the downlink reception frequency information of the interference; and
whether the terminal device is allowed to report receiver sensitivity information of the interference.

6. The method according to any one of claims 1 to 5, further comprising:
transmitting third indication information, wherein the third indication information is used to indicate a capability of reporting interference information supported by the terminal device.

7. The method according to claim 6, wherein the third indication information comprises at least one of:
capability of supporting to report uplink transmission frequency information of the interference;
capability of supporting to report an uplink transmission frequency information combination of the interference;
capability of supporting to report downlink reception frequency information of the interference;
capability of supporting to report a correspondence between the uplink transmission frequency information and the downlink reception frequency information of the interference;
capability of supporting to report a correspondence between the uplink transmission frequency information combination and the downlink reception frequency information of the interference;
capability of supporting to report receiver sensitivity information of the interference; and
receiver sensitivity capability information of the terminal device.

8. The method according to claim 7, wherein the receiver sensitivity capability information of the terminal device comprises at least one of:
a receiver reference sensitivity power level; and
a maximum sensitivity degradation value.

9. The method according to any one of claims 1 to 7, wherein the interference information comprises at least one of:
uplink transmission frequency information;
an uplink transmission frequency information combination;
the uplink transmission frequency information and a downlink reception frequency information combination;
downlink reception frequency information;
a correspondence between the uplink transmission frequency information and the downlink reception frequency information;
a correspondence between the uplink transmission frequency information combination and the downlink reception frequency information;
receiver sensitivity information; and
an interfering party's radio technical indication and an interfered party's radio technical indication.

10. The method according to claim 9, wherein the frequency information comprises at least one of:
frequency point information;
bandwidth information;
starting frequency point information;
ending frequency point information;
starting physical resource block;
ending physical resource block; and
bandwidth section information.

11. The method according to claim 9, wherein the uplink transmission frequency information comprises:
an uplink transmission frequency and/or harmonic signal information of the uplink transmission frequency.

12. The method according to claim 11, wherein the harmonic signal information of the uplink transmission frequency comprises at least one of:
multiple of a harmonic signal relative to a fundamental signal; and
a frequency range of the harmonic signal.

13. The method according to claim 9, wherein the uplink transmission frequency information combination comprises:
a plurality of uplink transmission frequencies and/or intermodulation signal information between the plurality of the uplink transmission frequencies.

14. The method according to claim 13, wherein the intermodulation signal information between the plurality of the uplink transmission frequencies comprises at least one of:
an order of the intermodulation signal;
multiple information between individual frequencies in the intermodulation signal; and
operational relationship information between individual frequencies in the intermodulation signal.

15. The method according to any one of claims 9 to 14, wherein the receiver sensitivity information comprises at least one of:
a receiver reference sensitivity power level supported by the terminal device;
current sensitivity of a receiver in the terminal device;
receiver maximum sensitivity degradation supported by the terminal device;
current maximum sensitivity degradation of the receiver in the terminal device; and
current sensitivity degradation of the receiver in the terminal device.

16. A method for controlling interference, performed by a network device and comprising:
receiving first indication information, wherein the first indication information is used to indicate interference information of a terminal device.

17. The method according to claim 16, further comprising:
transmitting second indication information to the terminal device, wherein the second indication information is used to indicate a specified transmitting condition corresponding to the first indication information.

18. The method according to claim 17, wherein the specified transmitting condition comprises at least one of:
the second indication information indicating that transmitting the first indication information is allowed;
a receiver sensitivity being less than or equal to a first threshold value;
a receiver sensitivity degradation value being greater than or equal to a second threshold value;
a first measurement result being less than or equal to a third threshold value; and
a second measurement result being greater than or equal to a fourth threshold value.

19. The method according to claim 17, wherein the second indication information comprises at least one of:
whether the terminal device is allowed to report frequency information of the interference;
whether the terminal device is allowed to report uplink transmission frequency information of the interference;
whether the terminal device is allowed to report an uplink transmission frequency information combination of the interference;
whether the terminal device is allowed to report a frequency information combination of the interference;
whether the terminal device is allowed to report downlink reception frequency information of the interference;
whether the terminal device is allowed to report a correspondence between the uplink transmission frequency information and the downlink reception frequency information of the interference;
whether the terminal device is allowed to report a correspondence between the uplink transmission frequency information combination and the downlink reception frequency information of the interference; and
whether the terminal device is allowed to report receiver sensitivity information of the interference.

20. The method according to any one of claims 16 to 19, further comprising:
receiving third indication information, wherein the third indication information is used to indicate a capability of reporting interference information supported by the terminal device.

21. The method according to claim 20, wherein the third indication information comprises at least one of:
capability of supporting to report uplink transmission frequency information of the interference;
capability of supporting to report an uplink transmission frequency information combination of the interference;
capability of supporting to report downlink reception frequency information of the interference;
capability of supporting to report a correspondence between the uplink transmission frequency information and the downlink reception frequency information of the interference;
capability of supporting to report a correspondence between the uplink transmission frequency information combination and the downlink reception frequency information of the interference;
capability of supporting to report receiver sensitivity information of the interference; and
receiver sensitivity capability information of the terminal device.

22. The method according to claim 21, wherein the receiver sensitivity capability information of the terminal device comprises at least one of:
a receiver reference sensitivity power level; and
a maximum sensitivity degradation value.

23. The method according to any one of claims 16 to 22, wherein the interference information comprises at least one of:
uplink transmission frequency information;
an uplink transmission frequency information combination;
the uplink transmission frequency information and a downlink reception frequency information combination;
downlink reception frequency information;
a correspondence between the uplink transmission frequency information and the downlink reception frequency information;
a correspondence between the uplink transmission frequency information combination and the downlink reception frequency information;
receiver sensitivity information; and
an interfering party's radio technical indication and an interfered party's radio technical indication.

24. The method according to claim 23, wherein the frequency information comprises at least one of:
frequency point information;
bandwidth information;
starting frequency point information;
ending frequency point information;
starting physical resource block;
ending physical resource block; and
bandwidth section information.

25. The method according to claim 23, wherein the uplink transmission frequency information comprises:
an uplink transmission frequency and/or harmonic signal information of the uplink transmission frequency.

26. The method according to claim 25, wherein the harmonic signal information of the uplink transmission frequency comprises at least one of:
multiple of a harmonic signal relative to a fundamental signal; and
a frequency range of the harmonic signal.

27. The method according to claim 23, wherein the uplink transmission frequency information combination comprises:
a plurality of uplink transmission frequencies and/or intermodulation signal information between the plurality of the uplink transmission frequencies.

28. The method according to claim 27, wherein the intermodulation signal information between the plurality of the uplink transmission frequencies comprises at least one of:
an order of the intermodulation signal;
multiple information between individual frequencies in the intermodulation signal; and
operational relationship information between individual frequencies in the intermodulation signal.

29. The method according to any one of claims 23 to 28, wherein the receiver sensitivity information comprises at least one of:
a receiver reference sensitivity power level supported by the terminal device;
receiver maximum sensitivity degradation supported by the terminal device;
current maximum sensitivity degradation of the receiver in the terminal device; and
current sensitivity degradation of the receiver in the terminal device.

30. The method according to any one of claims 16 to 29, further comprising:
updating frequency information and/or uplink carrier aggregation information corresponding to the terminal device according to the first indication information.

31. The method according to claim 30, wherein updating the frequency information and/or the uplink carrier aggregation information corresponding to the terminal device comprises at least one of:
staggering a transmitting time of the uplink transmission frequency indicated by the first indication information and a receiving time of the downlink reception frequency;
invalidating the uplink transmission frequency indicated by the first indication information, or one or more uplink transmission frequencies in the uplink transmission frequency information combination;
staggering a transmitting time of all or part of the uplink frequencies in the uplink transmission frequency information combination indicated by the first indication information;
invalidating the downlink reception frequency indicated by the first indication information; and,
instructing the terminal device to reduce an uplink transmission power.

32. A communication device, configured on a terminal device side and comprising:
a transceiver module configured to transmit first indication information, wherein the first indication information is used to indicate interference information of the terminal device.

33. A communication device, configured on a network device side and comprising:
a transceiver module configured to receive first indication information, wherein the first indication information is used to indicate interference information of the terminal device.

34. A communication device, comprising:
a processor; and
a memory;
wherein a computer program is stored in the memory, and the processor executes the computer program stored in the memory to cause the device to execute the method according to any one of claims 1 to 15.

35. A communication device, comprising:
a processor; and
a memory;
wherein a computer program is stored in the memory, and the processor executes the computer program stored in the memory to cause the device to execute the method according to any one of claims 16 to 31.

36. A communication device, comprising:
a processor; and
an interface circuit configured to receive code instructions and transmit the code instructions to the processor;
wherein the processor is configured to run the code instructions to perform the method according to any one of claims 1 to 15.

37. A communication device, comprising:
a processor; and
an interface circuit configured to receive code instructions and transmit the code instructions to the processor;
wherein the processor is configured to run the code instructions to perform the method according to any one of claims 16 to 31.

38. A computer-readable storage medium having stored therein indications that, when executed, cause the method according to any one of claims 1 to 15 to be implemented.

39. A computer-readable storage medium having stored therein indications that, when executed, cause the method according to any one of claims 16 to 31 to be implemented.
